# EUROPEAN PATENT SPECIFICATION

(11) **EP 4 209 820 B1**
(45) Date of publication and mention of the grant of the patent: **19.11.2025**
(21) Application number: 22215106.0
(22) Date of filing: 20.12.2022
(51) Int. Cl.: G02B 21/36, G06T 7/00, G06V 20/69, G06V 10/62, G06V 10/82, G02B 21/00

(54) **MICROSCOPE SYSTEM AND SORTING SUPPORT METHOD**
MIKROSKOPSYSTEM UND SORTIERUNTERSTÜTZUNGSVERFAHREN
SYSTÈME DE MICROSCOPE ET PROCÉDÉ DE SUPPORT DE TRI

(30) Priority: 27.12.2021 JP 2021211890
(43) Date of publication of application: 12.07.2023
(73) Proprietor: Evident Corporation, Nagano 399-0495 (JP)
(72) Inventor: Yamane, Takuto, Kamiina-gun, Nagano, 3990495 (JP); Hattori, Toshiyuki, Kamiina-gun, Nagano, 3990495 (JP); Ohara, Yuta, Kamiina-gun, Nagano, 3990495 (JP)
(74) Representative: Gunzelmann, Rainer

(56) References cited:
- EP-A1- 3 547 675
- EP-A1- 3 904 937
- EP-A1- 4 130 843
- WO-A1-2021/200003
- MCCALLUM CHRISTOPHER ET AL: "Deep learning-based selection of human sperm with high DNA integrity", vol. 2, no. 1, 1 December 2019 (2019-12-01), XP055843297, Retrieved from the Internet <URL:https://www.nature.com/articles/s42003-019-0491-6.pdf> DOI: 10.1038/s42003-019-0491-6

## Description

### TECHNICAL FIELD

The disclosure of the present specification relates to a microscope system and a sorting support method.

### BACKGROUND

Along with the progress of late marriage and late childbirth, the number of patients who receive infertility treatment has increased year by year. In addition, demand for assisted reproductive technology (ART) has increased.

ART is a generic term for techniques for fertilizing an egg and a sperm extracted from humans in vitro, such as in vitro fertilization (IVF) and microinsemination, and is distinguished from general artificial insemination in which the collected sperm is injected into a uterus so as to be fertilized with the egg in vivo.

An exemplary technology related to ART is described in WO 2012/150689 A. WO 2012/150689 A describes a microscope suitable for intracytoplasmic sperm injection (ICSI) for use in microinsemination that is a type of ART. Note that ICSI is a method of directly injecting a sperm into an egg by piercing an injection pipette containing the sperm into the egg fixed with a holding pipette.

For an increase in the success rate of ICSI, it is important to inject a sperm suitable for fertilization, based on sperm sorting, into an egg. However, whether or not a sperm obtained in a process of sorting is appropriate in quality depends mainly on the experience of an embryologist as an operator. Thus, a difference in fertilization rate is likely to occur between embryologists.

Another prior art is known from EP 3 904 937 A1 which discloses a microscope system with a projection device, wherein the projected image includes an assisting image that assists with micro-insemination using the sample.

Note that the above description has been given with a process of sperm sorting as an example, but the above problem is not limited to such a process of sperm sorting and thus is likely to occur in a process of any target sorting.

In consideration of such circumstances as above, an object according to one aspect of the present invention is to provide a technology for supporting a process of sorting a target in a sample.

### SUMMARY

According to one aspect of the present invention, provided is a microscope system according to claim 1.

According to one aspect of the present invention, provided is a sorting support method according to claim 16.

According to the above aspects, support can be given to determination of whether or not the sample is appropriate in quality in a process of sorting.

### BRIEF DESCRIPTION OF DRAWINGS

The present invention will be more apparent from the following detailed description when the accompanying drawings are referenced.
FIG. 1 illustrates an exemplary configuration of a microscope system;
FIG. 2 illustrates an exemplary configuration of a microscope;
FIG. 3 illustrates an exemplary configuration of operation portions in an input device;
FIG. 4 illustrates an exemplary hardware configuration of a processing device;
FIG. 5 is a flowchart of an exemplary procedure of ICSI that an embryologist carries out;
FIG. 6 illustrates an exemplary configuration of drops formed as a sample in a petri dish;
FIG. 7 is a flowchart of an exemplary procedure of sperm sorting that an embryologist carries out;
FIG. 8 is a flowchart of exemplary sorting support processing;
FIG. 9 is a flowchart of exemplary target image generation processing;
FIG. 10 is a flowchart of exemplary image display processing;
FIG. 11 illustrates an exemplary optical image generated by the microscope;
FIG. 12 illustrates an exemplary digital image acquired by an imaging device;
FIG. 13 illustrates an exemplary result of object detection to the digital image;
FIG. 14 is an explanatory view for an exemplary method of generating a target image;
FIG. 15 illustrates an exemplary image viewed through an ocular lens;
FIG. 16 is an explanatory view for another exemplary method of generating a target image;
FIG. 17 illustrates another exemplary image viewed through an ocular lens;
FIG. 18 is a flowchart of other exemplary sorting support processing;
FIG. 19 is a flowchart of other exemplary image display processing;
FIG. 20 is an explanatory view for an exemplary method of generating an assistive image;
FIG. 21 illustrates another exemplary image viewed through an ocular lens;
FIG. 22 illustrates another exemplary image viewed through the ocular lens;
FIG. 23 illustrates another exemplary image viewed through the ocular lens;
FIG. 24 illustrates another exemplary image viewed through the ocular lens;
FIG. 25 illustrates another exemplary image viewed through the ocular lens;
FIG. 26 illustrates exemplary image output to a display device; and
FIG. 27 illustrates an exemplary configuration of a microscope system.

### DESCRIPTION OF EMBODIMENTS

### First Embodiment

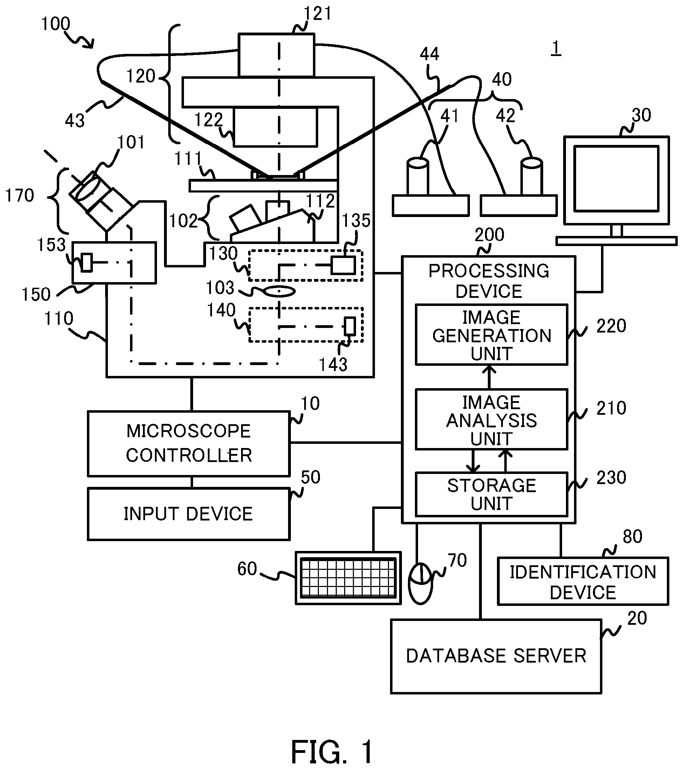

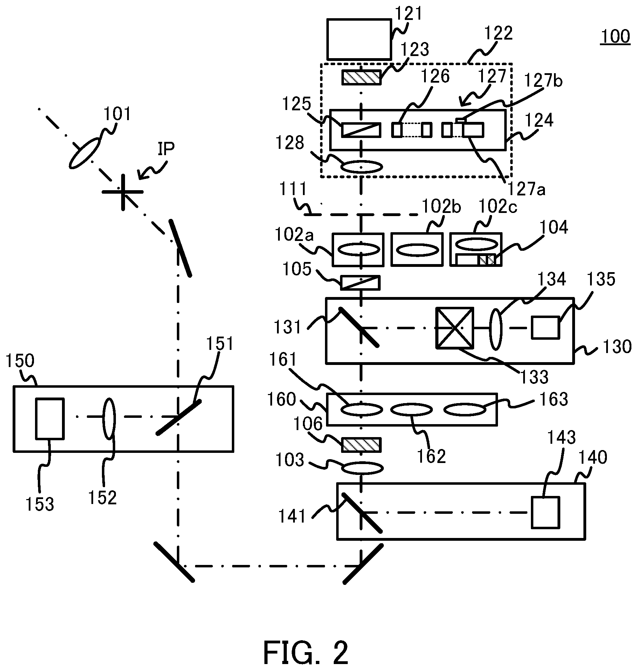

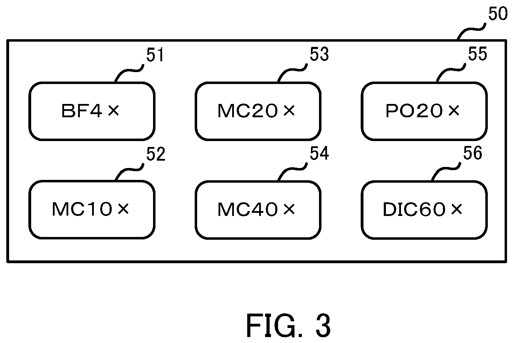

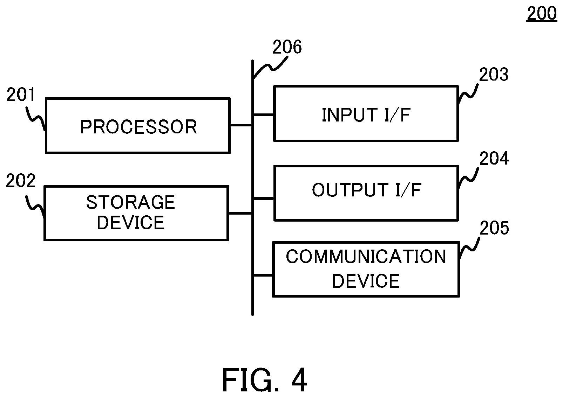

FIG. 1 illustrates an exemplary configuration of a microscope system 1. FIG. 2 illustrates an exemplary configuration of a microscope 100. FIG. 3 illustrates an exemplary configuration of operation portions in an input device 50. FIG. 4 illustrates an exemplary configuration of a processing device 200.

The microscope system 1 serves as a system for observation of a sample through an ocular lens 101. Specifically, the microscope system 1 serves as an inverted type of microscope system including a transmissive illumination system 120, for use in microinsemination, particularly, in sperm sorting. For example, an embryologist uses the microscope system 1. A sample to be observed in a process of sperm sorting corresponds to sperm suspension containing sperms stored in a petri dish.

The microscope system 1 includes at least the microscope 100, an imaging device 143, a projection device 153, and the processing device 200. The microscope 100 forms an optical image of a sample containing sperms each as a sorting target. The imaging device 143 acquires a digital image of the sample. Based on object detection to the digital image, the processing device 200 generates an image of a sorting target (hereinafter, referred to as a target image). Such a sorting target corresponds to a target to be determined as appropriate or not in quality by a user, namely, a target to be selected or not to be selected based on a result of determination of whether or not the target is appropriate in quality. The projection device 153 is an exemplary optical device that displays the target image larger in size than the sorting target in the optical image, on the image plane on which the optical image is formed. Note that, in the present specification, "displaying an image" indicates that an image is formed visibly, namely, an image is formed and disposed on a visible plane (position).

The microscope system 1 causes the projection device 153 to display the target image larger in size than the sorting target in the optical image, on the image plane on which the optical image of the sample is formed by the microscope 100. That is, in a case where the sorting target (sperm) in the optical image is displayed, for example, in a region of 1 mm × 1 mm on the image plane, the target image is displayed larger in size than 1 mm × 1 mm on the image plane. Thus, the user who is observing the sample through the ocular lens 101 can minutely observe the sperm as the sorting target included in the optical image, with the target image larger in size, without moving its eye away from the ocular lens 101. Thus, a favorable sperm can be specified accurately in a short time for extraction. Therefore, the microscope system 1 enables support to the user, such as an embryologist, who carries out a process of sperm sorting.

A specific exemplary configuration of the microscope system 1 will be described in detail below with reference to FIGS. 1 to 4. As illustrated in FIG. 1, the microscope system 1 includes a microscope controller 10, a display device 30, a plurality of input devices (input devices 40, 50, 60, and 70) and an identification device 80, in addition to the microscope 100, the imaging device 143, the projection device 153, and the processing device 200 described above. The microscope system 1 is in connection with a database server 20 in which various types of data are stored. Note that, in this example, the imaging device 143 and the projection device 153 are disposed in a microscope body 110 of the microscope 100.

The microscope 100 serves as an inverted microscope including the ocular lens 101. As illustrated in FIG. 1, the microscope 100 including the microscope body 110 includes a plurality of objectives 102, a stage 111, the transmissive illumination system 120, and an ocular barrel 170 that are attached to the microscope body 110. As described below, the microscope 100 further includes a modulation element for visualization of an unstained sample, such as a sperm or an egg, on each of an illumination optical path and an observation optical path. Through the microscope 100, the user, such as an embryologist, can observe a sample with four microscopy methods of bright field (BF) observation, polarized light (PO) observation, differential interference contrast (DIC) observation, and modulation contrast (MC) observation. Note that such modulation contrast observation is also referred to as relief contrast (RC) observation.

The plurality of objectives 102 is attached to a revolver 112. As illustrated in FIG. 2, the plurality of objectives 102 includes an objective 102a for BF observation, an objective 102b for PO observation and DIC observation, and an objective 102c for MC observation. The objective lens 102c includes a modulator 104. The modulator 104 includes three regions different in transmittance (e.g., a region having a transmittance of approximately 100%, a region having a transmittance of approximately 5%, and a region having a transmittance of approximately 0%).

Referring to FIG. 2, three objectives each corresponding to a microscopy method are exemplified. The plurality of objectives 102 may include, for each microscopy method, a plurality of objectives different in magnification. In the following description, given will be an exemplary case where the plurality of objectives 102 includes a 4-fold objective lens for BF observation, 10-fold, 20-fold, and 40-fold objectives for MC observation, a 20-fold objective lens for PO observation, and a 60-fold objective lens for DIC observation.

The revolver 112 serves as a switching device that makes a switch to an objective to be disposed on the optical path among the plurality of objectives 102. The revolver 112 makes a switch to an objective to be disposed on the optical path in accordance with the microscopy method and the observation magnification. The objective lens disposed on the optical path by the revolver 112 guides, to the ocular lens 101, transmitted light having passed through the sample.

A sample put in a container is placed on the stage 111. The container is, for example, a petri dish, and the sample includes germ cells, such as sperms and eggs. The stage 111 moves in the direction of the optical axis of the objective lens 102 disposed on the optical path and in the direction orthogonal to the optical axis of the objective lens 102. Note that the stage 111 may be a manual stage or an electric stage.

The transmissive illumination system 120 illuminates the sample placed on the stage 111 from above the stage 111. As illustrated in FIGS. 1 and 2, the transmissive illumination system 120 includes a light source 121 and a universal condenser 122. For example, the light source 121 may be a light emitting diode (LED) light source or a lamp light source, such as a halogen lamp light source.

As illustrated in FIG. 2, the universal condenser 122 includes a polarizer 123 (first polarizing plate), a plurality of optical element housed in a turret 124, and a condenser lens 128. The polarizer 123 is provided for use in MC observation, PO observation, and DIC observation. The turret 124 houses a plurality of optical elements each to be used due to switching responsive to the microscopy method. A DIC prism 125 is provided for use in DIC observation. An aperture plate 126 is provided for use in BF observation and PO observation. An optical element 127 includes, in combination, a slit plate 127a serving as a light shielding plate having a slit and a polarizing plate 127b (second polarizing plate) disposed covering part of the slit, and is provided for use in MC observation.

The ocular barrel 170 includes the ocular lens 101. A tube lens 103 is disposed between the ocular lens 101 and the objective lens 102. The tube lens 103 forms, based on transmitted light, an optical image of the sample on an image plane IP between the ocular lens 101 and the tube lens 103. In addition, based on light from the projection device 153, a target image to be described below is formed on the image plane IP. Thus, the optical image and the target image are displayed on the image plane IP. The user of the microscope system 1 observes, through the ocular lens 101, a virtual image of the optical image and the target image formed on the image plane IP.

As illustrated in FIGS. 1 and 2, the microscope body 110 includes a laser assisted hatching unit 130, an imaging unit 140, and a projection unit 150. As illustrated in FIG. 2, the microscope body 110 includes an intermediate variable-magnification unit 160. Furthermore, the microscope body 110 includes a DIC prism 105 and an analyzer 106 that are insertable into and removable from the optical path.

As illustrated in FIG. 2, the laser assisted hatching unit 130 serves as a laser unit disposed between the objective lens 102 and the tube lens 103. The laser assisted hatching unit 130 introduces laser light from between the objective lens 102 and the tube lens 103, to irradiate the sample with the laser beam. More specifically, the laser assisted hatching unit 130 irradiates, with laser light, for example, a zona pellucida surrounding an embryo grown from the fertilized egg. The laser assisted hatching unit 130 includes a splitter 131, a scanner 133, a lens 134, and a laser 135. The splitter 131 is, for example, a dichroic mirror. The scanner 133 is, for example, a galvano scanner, and adjusts the position of irradiation of laser light in the direction orthogonal to the optical axis of the objective lens 102. The lens 134 converts the laser light into a parallel pencil of light. Thus, the laser light is condensed on the sample through the objective lens 102.

As illustrated in FIG. 2, the imaging unit 140 includes a splitter 141 and the imaging device 143 that acquires a digital image of the sample, based on transmitted light. The imaging unit 140 is disposed between the tube lens 103 and the ocular lens 101. The splitter 141 is, for example, a half mirror. The tube lens 103 forms an optical image of the sample on the light receiving face of an image pickup element included in the imaging device 143. The imaging device 143 is, for example, a digital camera that acquires a digital image, and the image pickup element included in the imaging device 143 is, for example, a charge coupled device (CCD) image sensor or a complementary metal-oxide-semiconductor (CMOS) image sensor. The image pickup element detects light from the sample and converts the detected light into an electric signal by photoelectric conversion. The imaging unit 140 outputs, to the processing device 200, the digital image acquired by the imaging device 143.

The projection unit 150 is disposed between the tube lens 103 and the ocular lens 101. As illustrated in FIG. 2, the projection unit 150 includes a splitter 151, a lens 152, and the projection device 153. The splitter 151 is, for example, a half mirror. The projection device 153 projects the target image generated by the processing device 200. More particularly, the lens 152 condenses light from the projection device 153 on the image plane of the tube lens 103, namely, on the image plane IP on which the optical image is formed, so that the projection device 153 projects the target image onto the image plane IP.

The intermediate variable-magnification unit 160 is disposed between the objective lens 102 and the tube lens 103. As illustrated in FIG. 2, the intermediate variable-magnification unit 160 includes a plurality of lenses (lenses 161, 162, and 163) and makes a switch to a lens to be disposed on the optical path from among the plurality of lenses, to change the magnification of the optical image formed on the image plane. Use of the intermediate variable-magnification unit 160 enables a change in the magnification of the optical image without switching the objective lens 102 located close to the sample.

The DIC prism 105 and the analyzer 106 are disposed between the objective lens 102 and the tube lens 103. The DIC prism 105 is provided for use in DIC observation. The analyzer 106 is provided for use in PO observation and DIC observation.

At the time of MC observation, in the microscope 100, the polarizer 123 and the optical element 127 are disposed on the illumination optical path as a modulation element that modulates illuminating light with which the sample is irradiated (hereinafter, referred to as a first modulation element) and the modulator 104 is disposed on the observation optical path as a modulation element that modulates transmitted light (hereinafter, referred to as a second modulation element). At the time of PO observation, the polarizer 123 is disposed on the illumination optical path as the first modulation element, and the analyzer 106 is disposed on the observation optical path as the second modulation element. At the time of DIC observation, the polarizer 123 and the DIC prism 125 are disposed on the illumination optical path as the first modulation element, and the analyzer 106 and the DIC prism 105 are disposed on the observation optical path as the second modulation element. Thus, an unstained sample can be visualized, enabling, for example, sperm sorting.

The microscope controller 10 serves as a device that controls the microscope 100. The microscope controller 10 in connection with the processing device 200, the input device 50, and the microscope 100 controls the microscope 100 in accordance with a command from the processing device 200 or the input device 50.

The display device 30 is, for example, a liquid crystal display, a plasma display, an organic EL display, a CRT display, or an LED matrix panel.

The input device 40 includes a handle 41 and a handle 42. Operating the handle 41 and the handle 42 controls the operation of a micromanipulator, not illustrated, that moves a pipette 43 and a pipette 44. The pipette 43 and the pipette 44 are used in order to manipulate the sample in a process of microinsemination including sperm sorting. The pipette 43 is, for example, a holding pipette, and the pipette 44 is, for example, an injection pipette.

The input device 50 serves as a hand switch device for changing settings regarding the microscopy method and observation magnification of the microscope 100. As illustrated in FIG. 3, for example, the input device 50 includes six buttons (buttons 51 to 56). Thus, the user simply presses any of the buttons, so that a prompt switch can be made to the corresponding settings in the microscope 100.

When the user presses the button 51, the settings of the microscope 100 are switched to the settings of BF observation and a 4-hold observation magnification (hereinafter, referred to as BF 4× observation). When the user presses the button 52, the settings of the microscope 100 are switched to the settings of MC observation and a 10-fold observation magnification (hereinafter, referred to as MC 10× observation). When the user presses the button 53, the settings of the microscope 100 are switched to the settings of MC observation and a 20-fold observation magnification (hereinafter, referred to as MC 20× observation). When the user presses the button 54, the settings of the microscope 100 are switched to the settings of MC observation and a 40-fold observation magnification (hereinafter, referred to as MC 40× observation). When the user presses the button 55, the settings of the microscope 100 are switched to the settings of PO observation and a 20-fold observation magnification (hereinafter, referred to as PO 20× observation). When the user presses the button 56, the settings of the microscope 100 are switched to the settings of DIC observation and a 60-fold observation magnification (hereinafter, referred to as DIC 60× observation).

The input device 60 corresponds to a keyboard. The input device 70 corresponds to a mouse. The input device 60 and the input device 70 are each in connection with the processing device 200. Note that the microscope system 1 may include other input devices, not illustrated, such as a touch panel, a sound input device, and a foot pedal.

The identification device 80 acquires identification information given to the sample. Note that the "given to the sample" includes, for example, a case where the identification information is attached to the container storing the sample. The identification information corresponds to information for identifying the sample, more specifically, for example, information for specifying the patient who has provided the sample. The identification device 80 may be, for example, a barcode reader, an RFID (registered trademark) reader, or a QR code (registered trademark) reader.

The processing device 200 generates the target image, based on object detection to the digital image acquired by the imaging device 143. The generated target image is output to the projection device 153 of the microscope 100 directly or through the microscope controller 10. Note that, as illustrated in FIG. 1, the processing device 200 is in connection with the microscope 100, the microscope controller 10, the display device 30, the input device 60, the input device 70, and the identification device 80. The processing device 200 is also in connection with the database server 20.

The processing device 200 includes, as functional constituent elements related to generation of the target image, an image analysis unit 210, an image generation unit 220, and a storage unit 230.

The image analysis unit 210 performs image analysis including object detection to the digital image and target determination in which a sperm to be sorted (hereinafter, simply referred to as a sorting target) is determined from sperms detected by the object detection (hereinafter, referred to as sorting candidates). The image analysis that the image analysis unit 210 performs may include, in addition to the object detection and the target determination, candidate evaluation in which the sorting candidates detected by the object detection are evaluated. Note that such a sorting candidate corresponds to a candidate for the sorting target, and the sorting target is determined from sorting candidates.

The method for object detection is not particularly limited. For example, the image analysis unit 210 may perform object detection with a trained model stored in the storage unit 230, to detect, as a sorting candidate, an object classified as a sperm. The trained model is not particularly limited in terms of algorithm, and thus a deep learning model, for example, based on SSD, YOLO, or FasterR-CNN, may be provided.

The method for target determination is not particularly limited. For example, the image analysis unit 210 may determine the sorting target, based on information input by the user. Specifically, the image analysis unit 210 may determine, as the sorting target, the sperm specified by the user, for example, with the input device 70. For example, the image analysis unit 210 may determine the sorting target, based on the positions of sorting candidates detected by object detection. Specifically, the image analysis unit 210 may determine, as the sorting target, the sperm closest to the center of the field of view or may determine, as the sorting target, the sperm having entered a frame provided at a previously determined position in the field of view. For example, the image analysis unit 210 may determine the sorting target, based on candidate evaluation. Specifically, the image analysis unit 210 may determine, as the sorting target, the sperm at the highest rating in candidate evaluation. The image analysis unit 210 may adopt any combination of the above methods for target determination, and thus may determine, as the sorting target, for example, the sperm closest to the center of the field of view from the sperms higher in rating than the criterion.

The method for candidate evaluation is not particularly limited. For example, the image analysis unit 210 may calculate the straight line velocity (VSL), curvilinear velocity (VCL), and average path velocity (VAP) of a sorting candidate tracked based on the digital image. Furthermore, the image analysis unit 210 may evaluate the sorting candidate, based on the linearity (LIN) and straightness (STR) calculated with the parameters. That is, the image analysis unit 210 may evaluate the sorting candidate, based on the motility of the sorting candidate.

Furthermore, the image analysis unit 210 may detect a vacuole part included in the sorting candidate, based on the digital image, to perform vacuole counting.

An embryologist holds, for minute observation, a promising sperm with a tool, such as a pipette, and determines whether or not the sperm is suitable for microinsemination. Thus, based on the digital image, the image analysis unit 210 may evaluate whether or not each sorting candidate has been held, and may determine the sorting target from the sorting candidates, based on the evaluation of whether or not each sorting candidate has been held. Note that, for example, based on image classification with the trained model stored in the storage unit 230, the image analysis unit 210 may calculate the above evaluation (whether or not each sorting candidate has been held). The image analysis unit 210 may calculate evaluation of whether or not each sorting candidate has been held, based on the positional relationship between each sorting candidate and a tool, such as a pipette, detected by object detection.

The image generation unit 220 generates the target image as an image of the sorting target determined by the image analysis unit 210 based on the digital image. The method of generating the target image is not particularly limited. For example, the image generation unit 220 may extract the region of the sorting target determined by the image analysis unit 210 from the digital image, to generate the target image. For example, the image generation unit 220 may further perform image processing to the extracted image, to generate the target image. For example, the image generation unit 220 may extract the region of the sorting target from an image resulting from image processing to the digital image, to generate the target image. For example, such image processing may be brightness adjustment processing, contrast emphasis processing, denoising processing, or any other processing. Any combination of the pieces of processing may be provided.

In order for the projection device 153 to project, on the image plane, the target image larger in size than the sorting target in the optical image projected on the image plane, the image generation unit 220 may enlarge or reduce, by digital zooming, the extracted image from the digital image to adjust the size of the target image to be generated. Due to a change between objectives at the time of acquisition of the digital image or a change in the projection magnification of the digital image to the image plane, the size of the target image may be adjusted. Other adjustment methods may be provided. Any combination of the methods may be provided. The total magnification of the target image to be disposed on the image plane may be determined in accordance with the size of the sorting target or the total magnification of the optical image. The total magnification of the target image corresponds to the total magnification to the size of the sorting target on the object face. The total magnification of the optical image corresponds to the total magnification to the size of the sample on the object face, namely, the final magnification of the image that the user observes. The total magnification of the target image and the total magnification of the optical image each correspond to the final magnification of the image that the user observes. That is, the total magnification of the target image corresponds to the magnification at the time of observation of the target image (real image) formed on the image plane, as a virtual image through the ocular lens, namely, the magnification of the virtual image of the enlarged real image. The total magnification of the optical image corresponds to the magnification at the time of observation of the optical image (real image) formed on the image plane, as a virtual image through the ocular lens, namely, the magnification of the virtual image of the enlarged real image. Specifically, the image generation unit 220 may change the total magnification of the target image, in accordance with the size of the sorting target detected by the image analysis unit 210. The image generation unit 220 may change the total magnification of the target image, in accordance with the total magnification of the optical image determined based on the settings of the microscope system 1, namely, the magnification of the virtual image.

The region of the sorting target to be extracted from the digital image is, for example, a region including the entirety of the corresponding sperm detected by object detection. However, the entirety of the corresponding sperm is not necessarily extracted. The range to be extracted of the sorting target may be changed based on the settings of the microscope system 1. Thus, in accordance with the settings of the microscope system 1, the image generation unit 220 may extract the region of the entirety of the sperm (head to tail), the region ranging from the head to neck of the sperm, the region of only the head, the region of only the neck, the region of only the tail, or a specified region of the sperm. The settings of the microscope system 1 may be changed, for example, in accordance with a part to be noted for sorting by the user in the sorting target.

The target image generated by the image generation unit 220 is output to the projection device 153. Thus, the projection device 153 projects the target image onto the image plane, so that the target image is projected, on the image plane, larger in size than the sorting target in the optical image. Thus, desirably, the target image is displayed, on the image plane, higher in total magnification than the optical image.

The storage unit 230 stores a trained model for use in image analysis that the image analysis unit 210 performs. Specifically, the storage unit 230 stores a trained model for object detection for detection of sperms as sorting candidates and a trained model for candidate evaluation for evaluation of each sperm as a sorting candidate. With the trained models stored in the storage unit 230, the image analysis unit 210 performs object detection and candidate evaluation.

Note that the processing device 200 may be a general-purpose computer or a dedicated computer. The processing device 200 may have, but is not particularly limited to, such a physical configuration as illustrated in FIG. 4. Specifically, the processing device 200 may include a processor 201, a storage device 202, an input interface (I/F) 203, an output interface (I/F) 204, and a communication device 205 that may be mutually connected through a bus 206.

The processor 201 may include hardware, in which the hardware may include, for example, at least one of a circuit that processes a digital signal or a circuit that processes an analog signal. The processor 201 can include, for example, on a circuit board, a single circuit device or a plurality of circuit devices (e.g., ICs) or a single circuit element or a plurality of circuit elements (e.g., a resistor and a capacitor). The processor 201 may be a central processing unit (CPU). As the processor 201, various types of processors including a graphics processing unit (GPU) and a digital signal processor (DSP) may be provided. The processor 201 may be a hardware circuit including an application specific integrated circuit (ASIC) or a field-programmable gate array (FPGA). The processor 201 can include, for example, an amplifier circuit or a filter circuit that processes an analog signal. The processor 201 executes a program stored in the storage device 202, to function as the image analysis unit 210 and the image generation unit 220 described above.

The storage device 202 may include a memory and/or a different storage device. The memory may be, for example, a random access memory (RAM). The memory may be a semiconductor memory, such as a static random access memory (SRAM) or a dynamic random access memory (DRAM). Examples of the storage device 202 may include a register, a magnetic storage device, such as a hard disk device, an optical storage device, such as an optical disc device, an internal hard disk drive, an external hard disk drive, a solid-state storage device, a CD-ROM, a DVD, other optical disc storage devices, other magnetic disk storage devices, and other storage devices. The storage device 202 stores a program to be executed by the processor 201, a trained model, and other data, and functions as the storage unit 230 described above. Note that the storage device 202 is an exemplary non-transitory computer-readable storage medium.

The input I/F 203 is connected to an input device that the user of the microscope system 1 (e.g., an embryologist) operates, receives an operation signal corresponding to an operation to the input device, and outputs the operation signal to the processor 201.

The output I/F 204 is connected to the display device 30. The output I/F 204 may be further connected to a sound output device, such as a speaker, that outputs sound, a light emitting device, such as a lamp, that outputs light, or a vibration device, such as a vibrator, that outputs vibration, not illustrated.

The communication device 205 serves as a device that exchanges data with the microscope 100 or other devices. The communication device 205 may be a communication device that exchanges data by wire or a communication device that exchanges data by wireless. The program and the trained model stored in the storage device 202 may be acquired by the communication device 205 from a different device through the Internet.

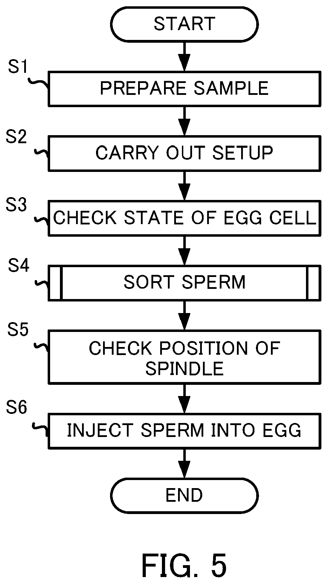

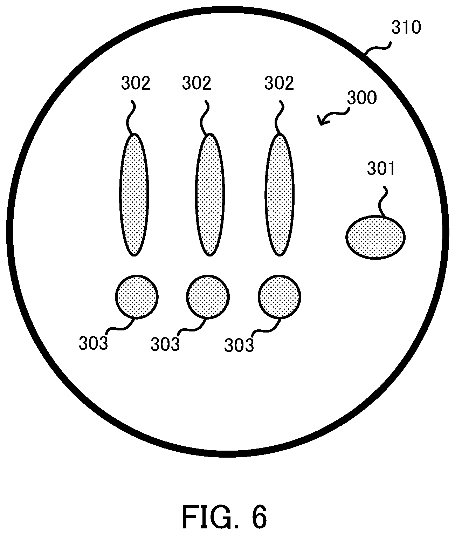

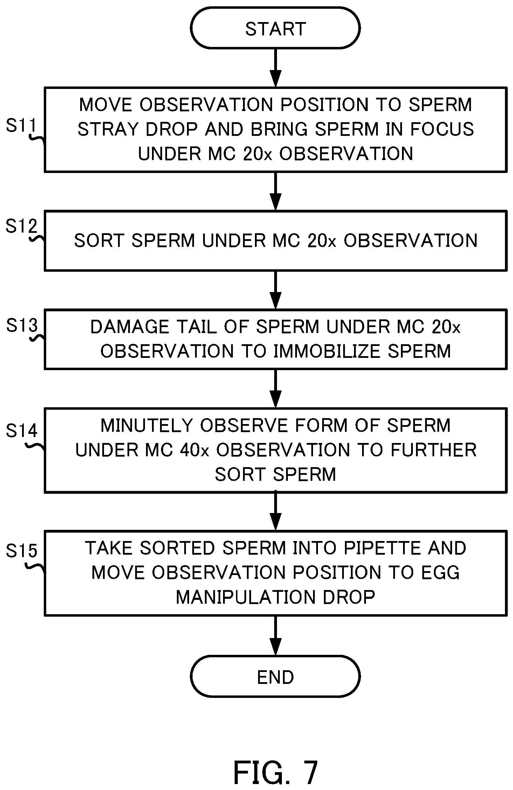

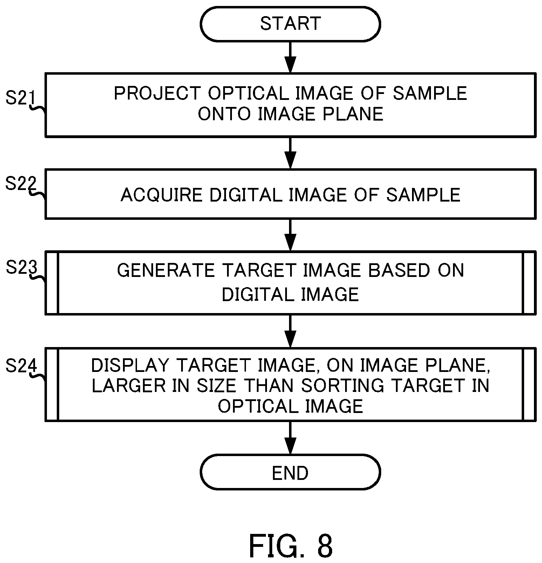

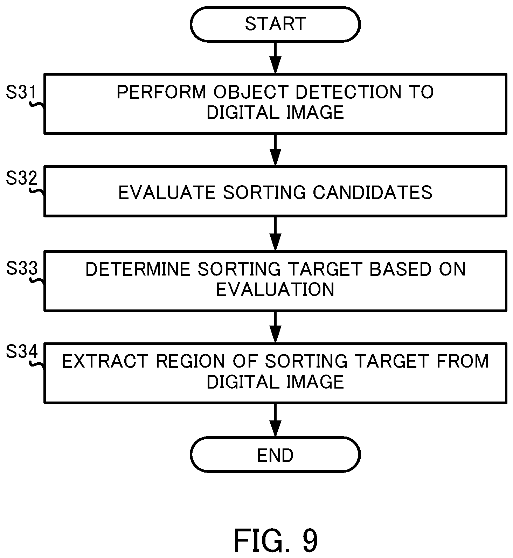

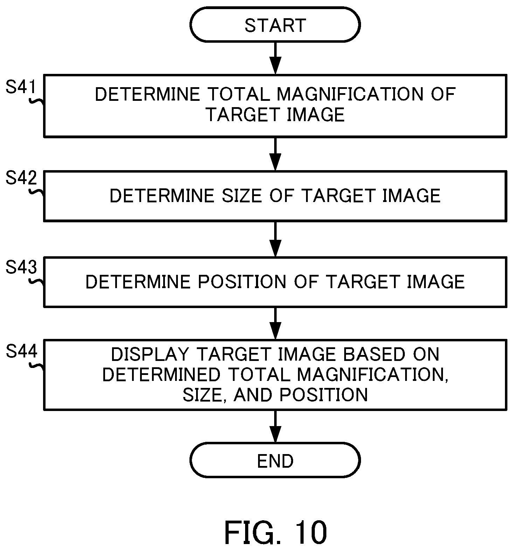

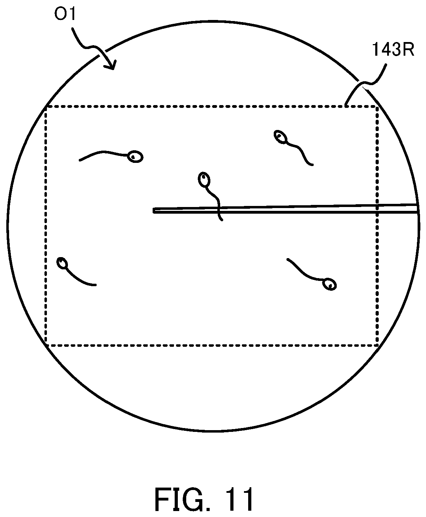

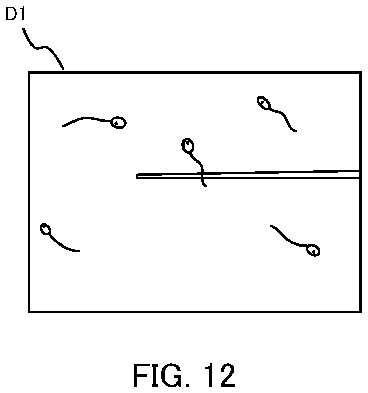

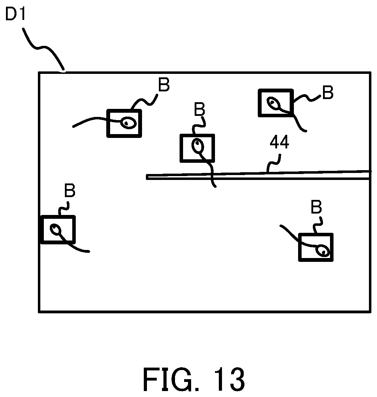

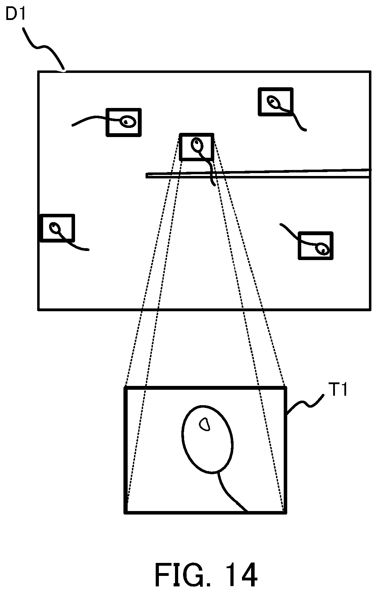

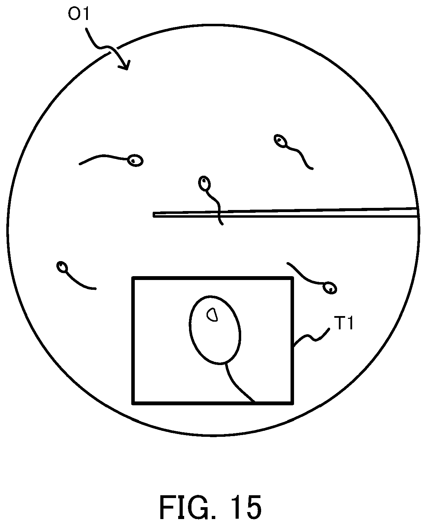

FIG. 5 is a flowchart of an exemplary procedure of ICSI that an embryologist carries out. FIG. 6 illustrates an exemplary configuration of drops formed as a sample 300 in a petri dish 310. FIG. 7 is a flowchart of an exemplary procedure of sperm sorting that an embryologist carries out. FIG. 8 is a flowchart of exemplary sorting support processing. FIG. 9 is a flowchart of exemplary target image generation processing. FIG. 10 is a flowchart of exemplary image display processing. FIG. 11 illustrates an exemplary optical image generated by the microscope 100. FIG. 12 illustrates an exemplary digital image acquired by the imaging device 143. FIG. 13 illustrates an exemplary result of object detection to the digital image. FIG. 14 is an explanatory view for an exemplary method of generating a target image. FIG. 15 illustrates an exemplary image viewed through the ocular lens 101. Specific application of a sperm-sorting support method that the microscope system 1 performs to ICSI will be described below with reference to FIGS. 5 to 15.

First, the user prepares a sample (step S1). In this step, for example, as illustrated in FIG. 6, the user creates the sample 300 containing a plurality of drops in the petri dish 310 and then disposes the sample 300 on the stage 111.

A drop 301 serves as a cleaning drop and is used to clean a pipette. Drops 302 each serve as a sperm stray drop, for example, resulting from dropping sperm suspension into a PVP solution. Drops 303 each serve as an egg manipulation drop, for example, made of an m-HTF solution containing an egg. Note that the m-HTF solution is an Hepps-containing HTF solution to which 10% serum is added. The drops are covered with mineral oil.

Next, the user sets up the microscope system 1 (step S2). In this step, for example, the user presses the button 51 of the input device 50 to switch the settings of the microscope system 1 to BF 4× observation. After that, while operating the input device 40, the user adjusts the respective positions of the pipette 43 and the pipette 44 to bring the pipette 43 and the pipette 44 in focus. Furthermore, with movement of the stage 111, the pipette 43 and the pipette 44 are each cleaned with the drop 301 (cleaning drop).

After completion of the setup, the user checks the state of the egg (egg cell) in a drop 303 (egg manipulation drop) (step S3). In this step, for example, the user presses the button 53 of the input device 50 to switch the settings of the microscope system 1 to MC 20× observation. Due to observation of the morphology of the egg under MC 20× observation, the egg is sorted. Furthermore, for example, the user may press the button 55 of the input device 50 to switch the settings of the microscope system 1 to PO 20× observation. Due to observation of the spindle of the egg under PO 20× observation, the degree of maturation of the egg may be determined for further egg sorting.

After egg sorting, the user carries out sperm sorting, in accordance with the procedure illustrated in FIG. 7 (step S4). First, for example, the user presses the button 53 of the input device 50 to switch the settings of the microscope system 1 to MC 20× observation. Then, while moving the stage 111, the user moves the observation position to a drop 302 (sperm stray drop) and brings a sperm in focus under MC 20× observation (step S11).

Next, the user sorts a sperm suitable for fertilization under MC 20× observation (step S12). Conventionally, in this step, based on the morphology and motility of a sperm under observation with an optical image, an embryologist determines the quality of the sperm and sorts the sperm based on the determination. Advantageously, MC 20× enables an adequate field of view to the size of the sperm, leading to facilitation of a grasp of the motility of the sperm. However, MC 20× is too low in magnification for an accurate grasp of the morphology of the sperm. Thus, observation with a higher magnification is required for the sperm sorted in step S12, causing a time-consuming process of sorting and rework, disadvantageously.

In consideration of such problems, in step S12, the microscope system 1 displays the target image, on the image plane, larger in size than the sorting target in the optical image. Projection of the target image larger in size than the sorting target in the optical image enables assistance to user's determination of the morphology of the sperm difficult conventionally in this step. This leads to inhibition of rework due to different determination in the post-step, enabling, for example, omission of a switch to MC 40x observation in step S14. Furthermore, projection of the optical image and the target image on the same image plane enables an accurate grasp of the morphology of the sperm being noted (sperm as the sorting target) on the target image with checking of the motility of the sperm mainly on the optical image. Therefore, sperm sorting with checking in both motility and morphology can be carried out, enabling inhibition of rework due to different determination in the post-step.

Specifically, in step S12, the microscope system 1 performs the sorting support processing illustrated in FIG. 8, so that the target image is projected together with the optical image onto the image plane. In the sorting support processing, first, the microscope system 1 projects an optical image of the sample onto the image plane (step S21). In this step, the microscope 100 forms, on the image plane, for example, an optical image O1 illustrated in FIG. 11. Note that a region 143R illustrated in FIG. 11 indicates a region to be shot by the imaging device 143 in step S22.

Simultaneously with step S21, the microscope system 1 acquires a digital image (step S22). In this step, based on light from the sample, the imaging device 143 acquires, for example, a digital image D1 of the sample illustrated in FIG. 12 and outputs the acquired digital image D1 to the processing device 200.

After that, based on the digital image, the microscope system 1 generates a target image (step S23). In this step, the processing device 200 performs the target image generation processing illustrated in FIG. 9. In the target image generation processing, first, the processing device 200 performs object detection to the digital image D1 (step S31). In this step, for example, the image analysis unit 210 inputs the digital image D1 as an input image to the trained model to perform object detection, so that, as illustrated in FIG. 13, sperms are detected as sorting candidates. Note that FIG. 13 illustrates a state where a box B is given at the position of each object (each sorting candidate) classified as a sperm due to the object detection.

In response to detection of sorting candidates due to the object detection, the processing device 200 evaluates the sorting candidates (step S32). In this step, the image analysis unit 210 evaluates each sorting candidate. Specifically, the image analysis unit 210 may evaluate the motility of each sorting candidate. The image analysis unit 210 may evaluate whether or not each sorting candidate has been held. In the following description, given will be a case where the image analysis unit 210 evaluates a sorting candidate having been held relatively high and evaluates a sorting candidate having not been held relatively low.

After that, the processing device 200 determines a sorting target, based on the evaluation in step S32 (step S33). In this step, based on the evaluation, the image analysis unit 210 determines, as the sorting target, the sorting candidate evaluated highest from among the sorting candidates. Specifically, for example, the sperm held by the pipette 44 illustrated in FIG. 13 is determined as the sorting target.

In response to determination of the sorting target, the processing device 200 extracts the region of the sorting target from the digital image (step S34). In this step, for example, as illustrated in FIG. 14, the image generation unit 220 extracts the region of the sorting target from the digital image D1, to generate a target image T1. In step S34, the size of the target image T1 may be adjusted such that the target image T1 is displayed, by projection onto the image plane, larger than the sorting target in the optical image.

In response to generation of the target image in step S23, the microscope system 1 displays the target image, on the image plane, larger in size than the sorting target in the optical image (step S24). In this step, the processing device 200 performs the image display processing illustrated in FIG. 10. In the image display processing, first, the processing device 200 determines the total magnification of the target image T1 to be displayed on the image plane (step S41) and further determines the size of the target image T1 (step S42). In step S41, in a case where the total magnification of the optical image formed on the image plane is, for example, 200, the image analysis unit 210 determines the total magnification of the target image T1 to be projected on the image plane, larger than 200 (e.g., at 1000). In step S42, in a case where the sorting target in the optical image formed on the image plane is projected in a region of 1 mm × 1 mm, the image analysis unit 210 determines the size of the target image T1 not less than 1 mm × 1 mm.

Furthermore, the processing device 200 determines the position of the target image T1 to be displayed on the image plane (step S43). In this step, for example, the processing device 200 determines the position of the target image such that the region of the sperm as the sorting target included in the optical image and the target image do not overlap. Note that the position of the target image may be a previously designated position, such as on the upper side, lower side, right side, or left side with respect to the center of the field of view.

Finally, the processing device 200 displays the target image T1, based on the total magnification determined in step S41, the size determined in step S42, and the position determined in step S43 (step S44). In this step, based on the total magnification determined in step S41, the size determined in step S42, and the position determined in step S43, the processing device 200 allocates the pixels of the target image T1 to pixels of the projection device 153. As a result, the projection device 153 projects, at a position not overlapping the sorting target in the optical image on the image plane, the target image T1 larger in size than the sorting target in the optical image. Thus, for example, as illustrated in FIG. 15, the user can check, at the same time, the optical image O1 and the target image T1 displayed on the image plane. Thus, a sperm suitable for fertilization can be sorted with high accuracy, based on checking in both the morphology and motility of the sperm. In step S12, repetition of the sorting support processing illustrated in FIG. 8 enables tracking of the sperm as the sorting target moving in the field of view, so that the sperm as the sorting target can be observed thoroughly with the target image.

When a sperm is sorted in step S12, the user damages the tail of the sperm under RC 20× observation to immobilize the sperm (step S13). In this step, with a pipette, the user rubs the tail of the sperm against the bottom of the petri dish 310, to immobilize the sperm.

After that, the user may further minutely observe the morphology of the immobilized sperm, to further sort the sperm (step S14). In this step, for example, the user presses the button 54 of the input device 50 to switch the settings of the microscope system 1 to MC 40× observation. After that, the user may further sort the sperm under MC 40× observation. In this step, similarly to step S12, the microscope system 1 may perform the sorting support processing illustrated in FIG. 8 and project the target image, onto the image plane, larger in size than the sorting target in the optical image, to assist the embryologist in a process of sperm sorting.

After completion of sperm sorting, the user takes the sorted sperm into the pipette 44 as an injection pipette and moves the observation position to a drop 303 (egg manipulation drop) (step S15). Then, the user terminates a procedure of sperm sorting illustrated in FIG. 7.

Note that the microscope system 1 enables assistance with the target image projected in step S12 or S14 for determination of morphology, such as the presence or size of a vacuole in the head of the sperm, difficult conventionally to check.

After completion of sperm sorting, for preparation for sperm injection, the user checks the position of a spindle (step S5). In this step, the user observes the egg in the drop 303 selected in step S3 and checks the position of the spindle of the egg. Specifically, for example, the user presses the button 55 of the input device 50 to switch the settings of the microscope system 1 to PO 20× observation. After that, the user operates the pipette 43 as a holding pipette to change the orientation of the spindle such that the spindle of the egg visualized under PO 20× observation is in the 12 or 6 o'clock position. This is in order to prevent the spindle from being damaged by the pipette, thrust against the egg, in the 3 or 9 o'clock position in step S6 to be described below.

Finally, the user injects the sperm into the egg (step S6) and then terminates the ICSI. In this step, for example, the user presses the button 53 of the input device 50 to switch the settings of the microscope system 1 to MC 20× observation. After that, under MC 20× observation, the user fixes, with the pipette 43 as a holding pipette, the egg adjusted in orientation in step S5 and pierces the egg with the pipette 44 as an injection pipette. After that, the user injects the favorable sperm from the pipette 44 into the egg.

After termination of a procedure of ICSI illustrated in FIG. 5, the user returns the egg having the sperm injected therein to the incubator, leading to culture. With the input device 60 and the input device 70, the user may operate the processing device 200 to store, in the database server 20, information acquired due to the ICSI. For example, an image of the egg having the sperm injected therein, an image of the sorted sperm, and the process time of ICSI may be each stored, in the database server 20, in association with patient information on the sperm and the egg (e.g., maternal clinical data and examination results of semen including the sperm), or data of the culture fluid of the sperm and the egg (e.g., type, concentration, and PH).

As above, in ICSI, the microscope system 1 projects the target image as an image of the sperm as the sorting target, on the image plane, larger in size than the sorting target in the optical image. The size of a sperm is approximately 60 µm, and thus at least a 20-fold objective lens is required for determination of whether or not a sperm is favorable. In general, the field number of an inverted microscope is approximately 22, and thus the actual field of view is approximately Φ1 mm. A process of sorting a sperm, of which the size is approximately 60 µm, moving around freely in the region of an actual field of view of Φ1 mm is extremely difficult to carry out. In general, a sperm estimated as a favorable sperm is high in motility and a process of ICSI requires carrying out in a short time. Thus, in a process of sperm sorting, it is necessary to promptly observe the morphology of a sperm moving relatively fast to determine whether the sperm is favorable or not. Even under a process environment on which such strict conditions are imposed, the microscope system 1 enables checking of the motility of a sperm mainly on the optical image, simultaneous with checking of the morphology of the sperm based on the target image projected, on the image plane, higher in total magnification than the optical image. Thus, a favorable sperm can be sorted properly in a short time based on both the motility and morphology of the sperm, leading to achievement of an improvement in the success rate of fertilization. Therefore, the microscope system 1 enables effective assistance to a process of sorting a sperm in the sample.

### Second Embodiment

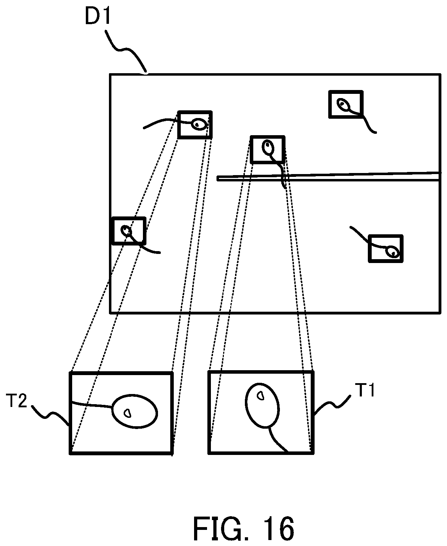

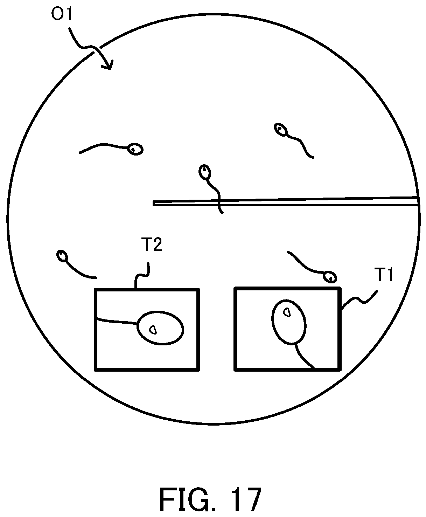

FIG. 16 is an explanatory view for another exemplary method of generating a target image. FIG. 17 illustrates another exemplary image viewed through an ocular lens 101. The present embodiment will be described below with reference to FIGS. 16 and 17. Note that a microscope system according to the present embodiment (hereinafter, also simply referred to as a microscope system) is similar in configuration to the microscope system 1.

The present embodiment is different from the first embodiment in that a plurality of target images is displayed on the image plane. The present embodiment is similar to the first embodiment in terms of the other points. Specifically, in step S33 in the target image generation processing illustrated in FIG. 9, a processing device 200 determines a plurality of sorting targets, based on evaluation in step S32. The number of sorting targets may be previously determined, such as two. The number of sorting targets may be determined based on the evaluation in step S32. For example, the processing device 200 may determine, as sorting targets, all sorting candidates evaluated as being above a criterion.

Thus, in step S34, for example, as illustrated in FIG. 16, the processing device 200 extracts the respective regions of a plurality of sorting targets from the digital image and generates a plurality of target images (target images T1 and T2).

The microscope system according to the present embodiment is similar to the microscope system 1 according to the first embodiment in that assistance can be given to user's determination of the morphology of a sperm because the target image is projected, on the image plane, larger in size than the sorting target in the optical image and in that a favorable sperm can be sorted properly in a short time based on both the motility and morphology of the sperm because the motility and morphology of the sperm can be both simultaneously checked with the optical image and the target image. As illustrated in FIG. 17, the microscope system according to the present embodiment determines, as sorting targets, a plurality of sperms included in an optical image O1 and displays a plurality of target images (target images T1 and T2) together with the optical image. Thus, because of a high possibility of early discovery of a favorable sperm above the criterion of user's determination of whether or not a sperm is appropriate in quality, sperm sorting is more efficient in the microscope system than in the microscope system 1.

### Third Embodiment

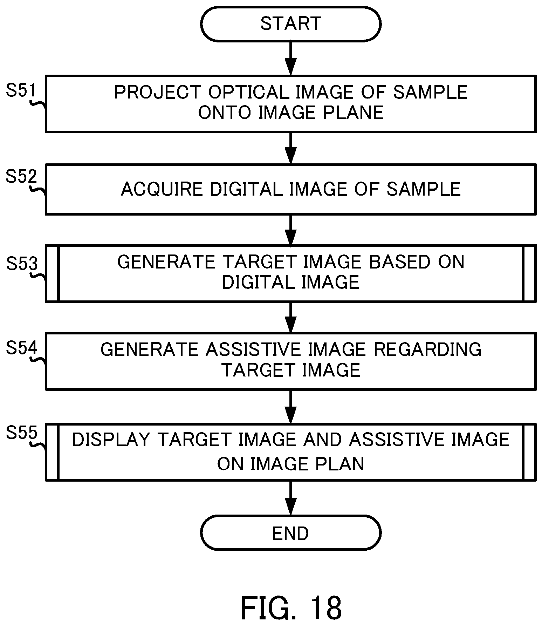

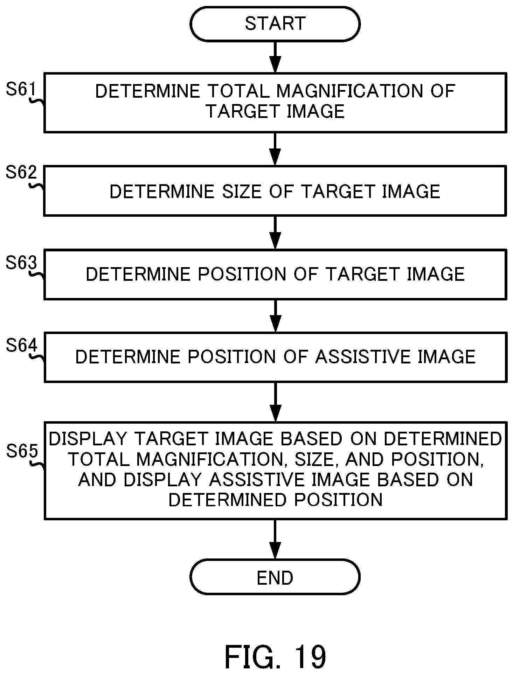

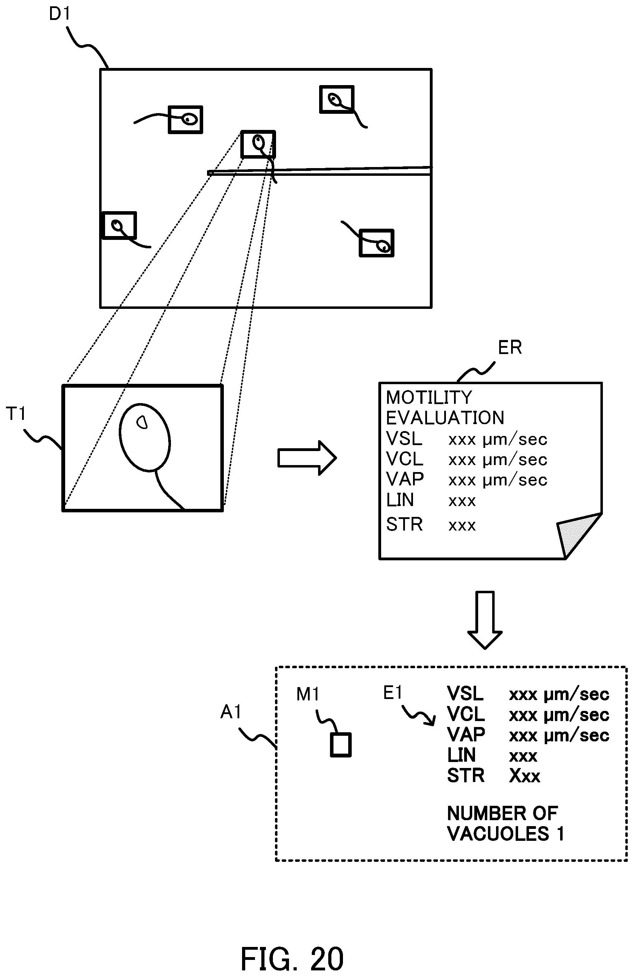

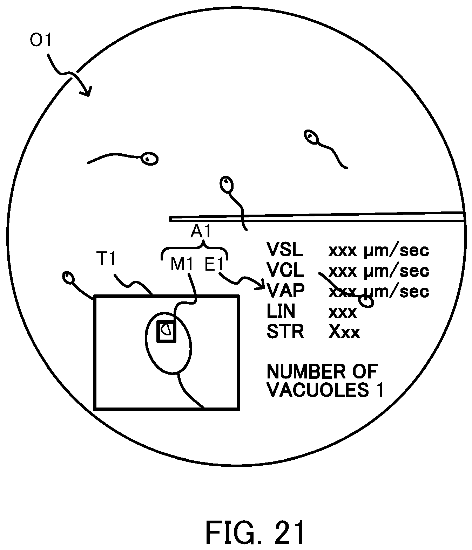

FIG. 18 is a flowchart of other exemplary sorting support processing. FIG. 19 is a flowchart of other exemplary image display processing. FIG. 20 is an explanatory view for an exemplary method of generating an assistive image. FIG. 21 illustrates another exemplary image viewed through an ocular lens 101. The present embodiment will be described below with reference to FIGS. 18 to 21. Note that a microscope system according to the present embodiment (hereinafter, also simply referred to as a microscope system) is similar in configuration to the microscope system 1.

The present embodiment is different from the first embodiment in that the sorting support processing illustrated in FIG. 18 is performed instead of the sorting support processing illustrated in FIG. 8. The present embodiment is similar to the first embodiment in terms of the other points.

In the sorting support processing illustrated in FIG. 18, the microscope system projects an optical image of a sample onto the image plane (step S51), acquires a digital image (step S52), and generates a target image (step S53). Note that the processing from step S51 to step S53 is similar to the processing from step S21 to step S23 in FIG. 8.

After that, the microscope system generates an assistive image regarding the target image (step S54). In this step, a processing device 200 generates the assistive image. The assistive image provides information related to the target image to the user, and typically provides information related to a sorting target, such as evaluation of the sorting target, to the user. Note that the assistive image is required to provide at least information related to the target image, and thus may provide information, such as the total magnification of the target image, not related to the sorting target, to the user.

In step S54, for example, as illustrated in FIG. 20, the processing device 200 may generate an evaluation result ER by evaluating the sorting target based on a target image T1 and then generate an assistive image A1 based on the evaluation result ER. Note that, referring to FIG. 20, the assistive image A1 includes evaluation information E1 regarding the motility of the sorting target, a marker M1 indicating the position or region of a vacuole in the sorting target, and information indicating the number of vacuoles.

The assistive image A1 may include evaluation information regarding the DNA integrity of the sorting target. That is, the assistive image A1 may include evaluation information regarding the quality of the sorting target, and the evaluation result ER is not limited to an evaluation result regarding the motility of the sorting target and thus may be an evaluation result regarding any quality of the sorting target.

Note that, referring to FIG. 20, as an example, the assistive image A1 is generated based on the target image T1, but the assistive image A1 may be generated based on information acquired in generating the target image T1 in step S53 (e.g., a candidate evaluation result).

In response to generation of the target image and the assistive image, the microscope system displays the target image and the assistive image on the image plane (step S55). In this step, the processing device 200 performs the image display processing illustrated in FIG. 19, so that, as illustrated in FIG. 21, the target image T1 and the assistive image A1 are displayed together with the optical image O1 on the image plane.

In the image display processing, the processing device 200 first determines the total magnification of the target image T1 to be disposed on the image plane (step S61), next determines the size of the target image T1 (step S62), and further determines the position of the target image T1 to be displayed on the image plane (step S63). Note that the processing from step S61 to step S63 are similar to the processing from step S41 to step S43 in FIG. 10.

The processing device 200 further determines the position of the assistive image A1 to be disposed on the image plane (step S64). In step S64, the processing device 200 may determine the position of the assistive image A1 based on a relationship with the target image T1. For example, the processing device 200 may determine the positional relationship between the assistive image A1 and the target image T1 such that the marker M1 in the assistive image A1 is superimposed on a region of interest in the target image T1. That is, the processing device 200 generates a projection image including the assistive image A1 and the target image T1 in the determined positional relationship.

Finally, the processing device 200 displays the target image T1 on the total magnification determined in step S61, the size determined in step S62, and the position determined in step S63, and displays the assistive image A1 on the position determined in step S64 (step S65). That is, the processing device 200 projects the projection image generated in step S64 onto the image plane. In this step, the processing device 200 allocates the pixels of the projection image to pixels of a projection device 153. That is, the processing device 200 allocates the pixels of the target image T1 to pixels of the projection device 153 based on the total magnification determined in step S61, the size determined in step S62, and the position determined in step S63, and further allocates the pixels of the assistive image A1 to pixels of the projection device 153 based on the position determined in step S64. As a result, the projection device 153 projects the target image T1 larger in size than the sorting target in the optical image, at a position not overlapping the sorting target in the optical image O1 on the image plane, and projects the assistive image A1 at a proper position on the image plane. Thus, as illustrated in FIG. 21, the user can check the optical image O1, the target image T1, and the assistive image A1, simultaneously.

The microscope system according to the present embodiment is similar to the microscope system 1 according to the first embodiment in that assistance can be given to user's determination of the morphology of a sperm because the target image is projected, on the image plane, larger in size than the sorting target in the optical image and in that a favorable sperm can be sorted properly in a short time based on both the motility and morphology of the sperm because the motility and morphology of the sperm can be both simultaneously checked with the optical image and the target image. As illustrated in FIG. 21, the microscope system according to the present embodiment projects, on the image plane, the assistive image that provides information related to the target image, so that further assistance can be given to user's determination of whether or not a sperm is appropriate in quality. In particular, superimposition of the marker indicating the position or region of interest of the sorting target on the target image larger in size than the sorting target in the optical image enables the user to know a part to be noted without a problem that the marker superimposed on the optical image is too small to view. Therefore, the microscope system according to the present embodiment enables highly accurate sorting of a sperm suitable for fertilization, so that a different in fertilization rate can be inhibited between embryologists.

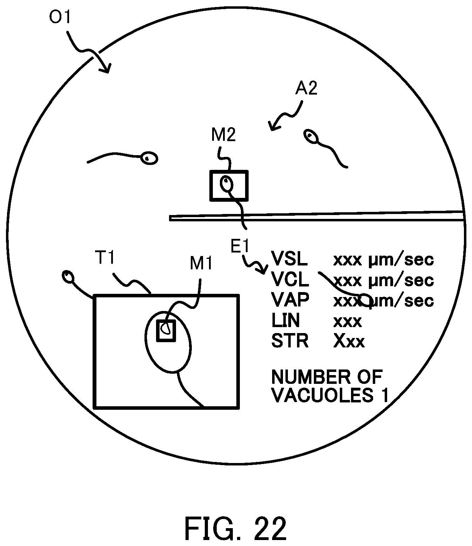

FIGS. 22 to 25 each illustrate another exemplary image viewed through the ocular lens 101. Information to be included in an assistive image is not limited to the evaluation information E1 and the marker M1 described above. As illustrated in FIGS. 22 to 25, other information may be included.

An assistive image A2 illustrated in FIG. 22 includes a marker M2 in addition to the evaluation information E1 and the marker M1. The marker M2 indicates the position or region of the sorting target in the optical image O1, and may be generated, for example, based on information acquired by object detection. The marker M2 included in the assistive image enables the user to easily identify to which sperm the target image T1 belongs on the optical image O1. Therefore, the user can easily carry out a process of checking the morphology of the sorting target with the target image T1 while checking the motility of the sorting target with the optical image O1.

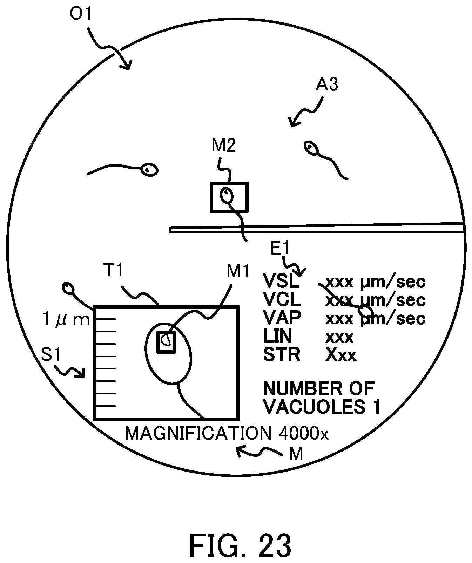

An assistive image A3 illustrated in FIG. 23 includes a scale S and magnification information M in addition to the evaluation information E1, the marker M1, and the marker M2. Inclusion of the scale S for measurement of the size of the target image T1 and the magnification information M indicating the total magnification of the target image T1 enables a grasp of the absolute size of each part of the sperm as the sorting target. The ratio of a part of interest (e.g., a vacuole) to the sperm is easily grasped. Thus, for example, determination of whether or not the sperm fulfills requirements indicated in WHO guidelines is easily made.

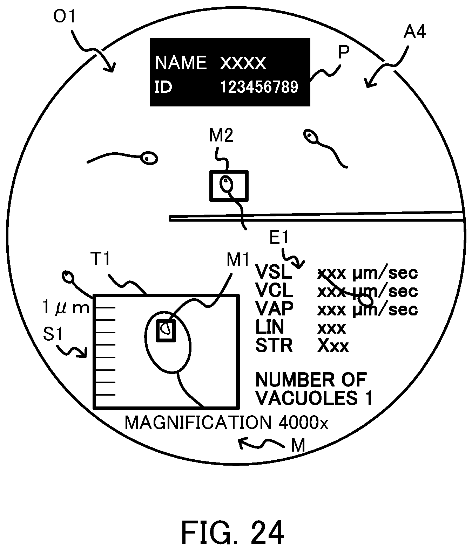

An assistive image A4 illustrated in FIG. 24 includes patient information P in addition to the evaluation information E1, the marker M1, the marker M2, the scale S, and the magnification information M. Inclusion of the patient information P enables the user to grasp, anytime, whose sperm is being sorted. Note that, with identification information acquired by an identification device 80, the patient information P is acquired from a database server 20.

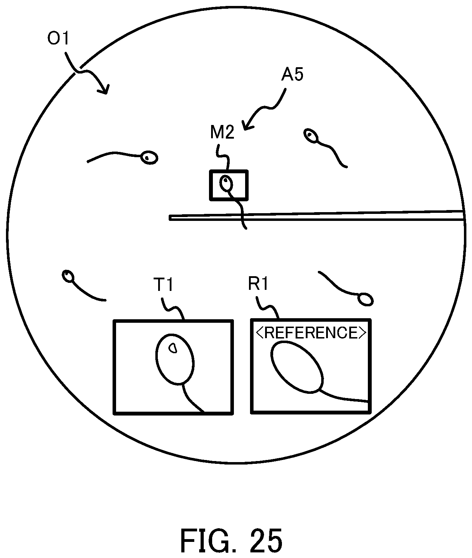

An assistive image A5 illustrated in FIG. 25 may include a reference image R1 for comparison with the target image T1 in addition to the marker M2. The reference image R1 is, for example, an image of a favorable sperm that succeeded in fertilization by microinsemination in the past. The reference image R1 included in the assistive image A5 enables the user to compare the sperm included in the reference image R1 and the sperm (sorting target) included in the target image T1. The user can refer to a result of such comparison for determination of whether or not the sorting target is a favorable sperm.

### Fourth Embodiment

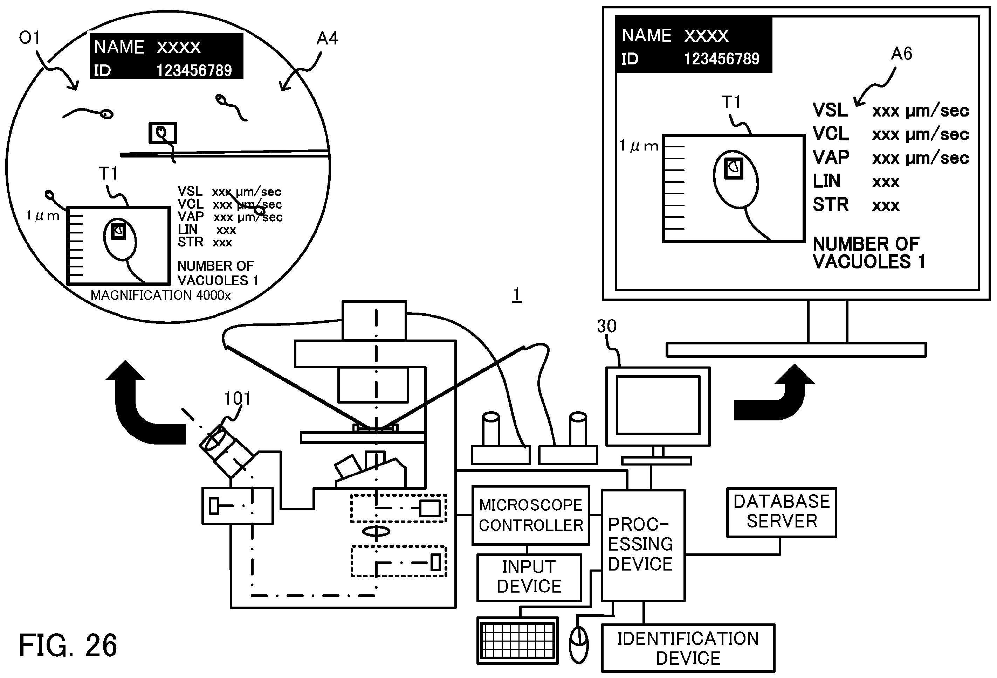

FIG. 26 illustrates exemplary image output to a display device 30. The present embodiment will be described below with reference to FIG. 26. Note that a microscope system according to the present embodiment (hereinafter, also simply referred to as a microscope system) is similar in configuration to the microscope system 1.

The present embodiment is different from the first embodiment in that a target image and an assistive image to be projected on the image plane are also displayed on the display device 30. The present embodiment is similar to the first embodiment in terms of the other points. Note that, as illustrated in FIG. 26, the image displayed on the display device 30 (target image T1 and assistive image A6) is not necessarily the same as the image projected on the image plane (target image T1 and assistive image A4).

The microscope system according to the present embodiment facilitates collaborative work of a plurality of embryologists. Specifically, while viewing the image displayed on the display device 30, an embryologist can give advice to another embryologist who is sorting a sperm through an ocular lens. Thus, the microscope system according to the present embodiment can be used in order for an experienced embryologist to give guidance to an inexperienced embryologist.

The display device 30 can display the assistive image larger. That is, a sorting target enlarged with a higher magnification can be displayed. Therefore, the microscope system according to the present embodiment enables highly accurate sorting of a sperm suitable for fertilization with more minute observation of the morphology of the sorting target based on checking with the display device 30.

Note that, even in a case where the target image T1 superimposed on an optical image O1 is difficult to view in observation with the ocular lens 101, the background of the target image T1 can be adjusted freely in observation with the display device 30, so that the visibility of the target image T1 can be reliably ensured. Thus, as an auxiliary means in a case where the visibility of the target image T1 on the optical image O1 is low, the image displayed on the display device 30 may be used.

The embodiments described above are specific examples for facilitating understanding of the invention, and thus the present invention is not limited to the embodiments. Modifications of the embodiments described above and alternatives to the embodiments described above are to be included. That is, the constituent elements in each embodiment can be modified without departing from the spirit and scope of the invention. Appropriate combination of a plurality of constituent elements disclosed in one or more of the embodiments enables a new embodiment. Some constituent elements may be omitted from the constituent elements in each embodiment, or some constituent elements may be added to the constituent elements in each embodiment. Furthermore, the procedure of processing in each embodiment may be changed in order as long as there is no contradiction. That is, the microscope system and the sorting support method according to the present invention can be variously modified or altered without departing from the scope of the claims.

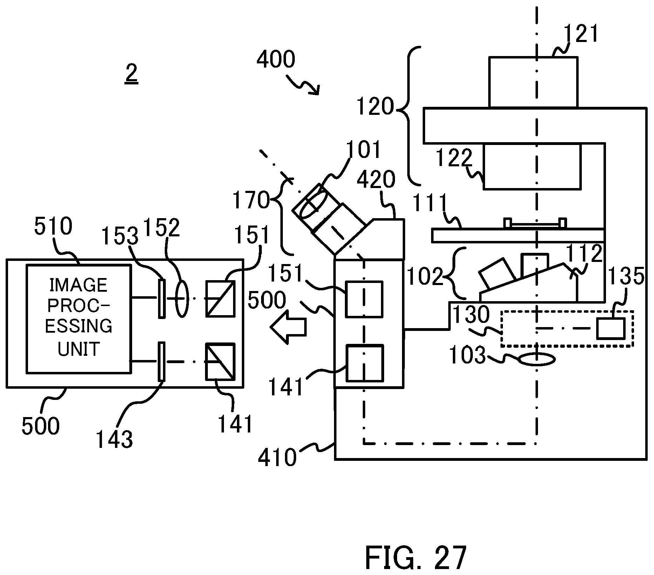

The microscope system 1 is exemplarily provided in the first embodiment, but this is not limiting in configuration. For example, a microscope system 2 illustrated in FIG. 27 may be provided. The microscope system 2 is different from the microscope system 1 in terms of including a microscope 400 instead of a microscope 100. The microscope 400 includes a projection unit 500 between a microscope body 410 and a barrel 420.

The projection unit 500 serves as a projection unit for a microscope and includes a projector (including a splitter 151, a lens 152, and a projection device 153) corresponding to the projection unit 150 illustrated in FIG. 1, an imager (including a splitter 141 and an imaging device 143) corresponding to the imaging unit 140 illustrated in FIG. 1, and an image processing unit 510. The image processing unit 510 functions as the image analysis unit 210, the image generation unit 220, and the storage unit 230 illustrated in FIG. 2.

The microscope system 2 including the projection unit 500 enables acquisition of an effect similar to that of the microscope system 1. An existing microscope system enhanced with the projection unit 500 enables acquisition of the above effect, so that the existing microscope system can be used effectively.

Each embodiment has been described with sperm sorting as an example, but the sorting target is not limited to a sperm. Note that, desirably, the sorting target is selected based on both motility and morphology.

In each embodiment described above, as an example, the projection device 153 projects the target image on the image plane. However, as long as the target image can be displayed on the image plane, a transmissive liquid crystal device disposed on the image plane may be used, instead of the projection device 153. In each embodiment described above, as an example, the target image is displayed, on the image plane, larger in size than the sorting target in the optical image. However, the target image may be displayed equally in size to or larger in size than the sorting target in the optical image, on the image plane on which the optical image is formed.

In each embodiment described above, as an example, one target image is generated for each sorting target. However, two or more target images may be generated for each sorting target. For example, a target image resulting from extraction of the region of the entirety of a sperm and a target image resulting from extraction of the region of only the head of the sperm may be generated, and then the target images may be disposed on the image plane with respective different total magnifications. Thus, with observation of a particular part of the sperm with a higher magnification, the entirety of the sperm can be observed with a proper magnification.

Note that, for example, the target image may be updated regularly based on the frame rate of a moving image shot by the imaging device 143, and the frequency of updating may be changed in accordance with setting. That is, the target image may be projected on the image plane as a moving image or a still image. Projection of the target image as a still image enables the user to observe the morphology of the sperm thoroughly. Projection of the target image as a still image enables avoidance of a situation in which the assistive image is projected at a position deviating from a predetermined position to the target image due to a delay of creation of the assistive image. Meanwhile, projection of the target image as a moving image enables the user to minutely observe the morphology of the sperm independently of the timing of shooting. In other words, this means that the processing device tracks the sorting target. Adjustment of the frequency of updating in projecting as a moving image enables avoidance of inconvenience due to a delay of creation of the assistive image.

In the present specification, the expression "based on A" does not indicate "based on only A" but indicates "based on at least A" and further indicates "based partially on at least A". That is, "based on A" may be "based on B in addition to A" or "based on part of A".

## Claims

1. A microscope system (1) comprising:
a microscope (100) configured to form an optical image (O1) of a sample containing a sorting target sperm;
an imaging device (143) configured to acquire a digital image (D1) of the sample;
a processing device (200) configured to:
- perform object detection on the digital image;
- detect sorting candidate sperms in the sample based on the object detection; and
- generate a target image (T1) as an image containing the sorting target sperm selected from the detected sorting candidate sperms; and
an optical device (153) configured to display the target image larger in size than the sorting target sperm in the optical image, on an image plane on which the optical image is formed.

2. The microscope system according to claim 1, wherein
the processing device is configured to track the sorting candidate sperms detected by the object detection.

3. The microscope system according to claim 1 or 2, wherein
the processing device is configured to determine the sorting target sperm from the sorting candidate sperms detected by the object detection.

4. The microscope system according to claim 3, wherein
the processing device is configured to determine the sorting target sperm from the sorting candidate sperms, based on evaluation regarding motility of the sorting candidate sperms.

5. The microscope system according to claim 4, wherein
the processing device is configured to calculate the evaluation, based on image classification with a trained model.

6. The microscope system according to any one of claims 3 to 5, wherein
the processing device is configured to determine the sorting target sperm from the sorting candidate sperms, based on respective positions of the sorting candidate sperms.

7. The microscope system according to any one of claims 1 to 6, wherein
the processing device is configured to perform the object detection with a trained model.

8. The microscope system according to any one of claims 1 to 7, wherein
the processing device is configured to generate an assistive image (A1) regarding the target image, and
the optical device is configured to display, on the image plane, the assistive image together with the target image.

9. The microscope system according to claim 8, wherein
the assistive image includes evaluation information regarding motility of the sorting target sperm.

10. The microscope system according to claim 9, wherein
the assistive image includes a marker indicating a position of interest or a region of interest in the target image.

11. The microscope system according to claim 10, wherein
the assistive image includes a marker indicating a vacuole of the sperm in the target image.

12. The microscope system according to any one of claims 8 to 11, wherein
the assistive image includes a marker indicating a position or region of the sorting target sperm in the optical image.

13. The microscope system according to any one of claims 8 to 12, wherein
the assistive image includes magnification information indicating a total magnification of the target image to a size of the sorting target sperm on an object face.

14. The microscope system according to any one of claims 8 to 13, wherein
the assistive image includes a scale given to the target image.

15. The microscope system according to any one of claims 1 to 14, wherein
the target image is displayed at a position not overlapping the sorting target sperm in the optical image.

16. A sorting support method comprising:
forming an optical image (O1) of a sample containing a sorting target sperm;
acquiring a digital image of the sample;
performing (S31) object detection on the digital image;
detecting (S31) sorting candidate sperms in the sample based on the object detection;
generating (S32, S33, S34) a target image as an image containing the sorting target sperm
selected from the detected sorting candidate sperms; and
displaying the target image larger in size than the sorting target sperm in the optical image, on an image plane on which the optical image is formed.

## Patentansprüche

1. Ein Mikroskopsystem (1), umfassend:
ein Mikroskop (100), ausgebildet zum Bilden eines optischen Bildes (O1) einer Probe, die ein Sortierziel-Spermium enthält;
eine Bildaufnahmeeinrichtung (143), ausgebildet zum Erfassen eines digitalen Bildes (D1) der Probe;
eine Verarbeitungsvorrichtung (200), ausgebildet zum:
- Ausführen einer Objekterkennung für das digitale Bild;
- Detektieren von Sortierkandidat-Spermien in der Probe basierend auf der Objekterkennung; und
- Erzeugen eines Zielbildes (T1) als Bild, das das aus den detektierten Sortierkandidat-Spermien ausgewählte Sortierziel-Spermium enthält; und
eine optische Vorrichtung (153), ausgebildet zum Anzeigen des Zielbildes in größerer Größe als das Sortierziel-Spermium im optischen Bild, auf einer Bildebene, auf der das optische Bild gebildet ist.

2. Das Mikroskopsystem nach Anspruch 1, wobei
die Verarbeitungsvorrichtung ausgebildet ist, die durch die Objekterkennung detektierten Sortierkandidat-Spermien zu verfolgen.

3. Das Mikroskopsystem nach Anspruch 1 oder 2, wobei
die Verarbeitungsvorrichtung ausgebildet ist, das Sortierziel-Spermium aus den durch die Objekterkennung detektierten Sortierkandidat-Spermien zu bestimmen.

4. Das Mikroskopsystem nach Anspruch 3, wobei
die Verarbeitungsvorrichtung ausgebildet ist, das Sortierziel-Spermium aus den Sortierkandidat-Spermien basierend auf einer Bewertung hinsichtlich der Motilität der Sortierkandidat-Spermien zu bestimmen.

5. Das Mikroskopsystem nach Anspruch 4, wobei
die Verarbeitungsvorrichtung ausgebildet ist, die Bewertung basierend auf einer Bildklassifizierung mit einem trainierten Modell zu berechnen.

6. Das Mikroskopsystem nach einem der Ansprüche 3 bis 5, wobei
die Verarbeitungsvorrichtung ausgebildet ist, das Sortierziel-Spermium aus den Sortierkandidat-Spermien basierend auf jeweiligen Positionen der Sortierkandidat-Spermien zu bestimmen.

7. Das Mikroskopsystem nach einem der Ansprüche 1 bis 6, wobei
die Verarbeitungsvorrichtung ausgebildet ist, die Objekterkennung mit einem trainierten Modell durchzuführen.

8. Das Mikroskopsystem nach einem der Ansprüche 1 bis 7, wobei
die Verarbeitungsvorrichtung ausgebildet ist, ein Hilfsbild (A1) in Bezug auf das Zielbild zu erzeugen, und
die optische Vorrichtung ausgebildet ist, auf der Bildebene das Hilfsbild zusammen mit dem Zielbild anzuzeigen.

9. Das Mikroskopsystem nach Anspruch 8, wobei
das Hilfsbild Bewertungsinformationen hinsichtlich der Motilität des Sortierziel-Spermiums umfasst.

10. Das Mikroskopsystem nach Anspruch 9, wobei
das Hilfsbild eine Markierung umfasst, die eine Position von Interesse oder eine Region von Interesse im Zielbild anzeigt.

11. Das Mikroskopsystem nach Anspruch 10, wobei
das Hilfsbild eine Markierung umfasst, die eine Vakuole des Spermiums im Zielbild anzeigt.

12. Das Mikroskopsystem nach einem der Ansprüche 8 bis 11, wobei
das Hilfsbild eine Markierung umfasst, die eine Position oder Region des Sortierziel-Spermiums im optischen Bild anzeigt.

13. Das Mikroskopsystem nach einem der Ansprüche 8 bis 12, wobei
das Hilfsbild Vergrößerungsinformationen umfasst, die eine Gesamtvergrößerung des Zielbildes relativ zu einer Größe des Sortierziel-Spermiums auf einer Objektfläche angeben.

14. Das Mikroskopsystem nach einem der Ansprüche 8 bis 13, wobei
das Hilfsbild einen dem Zielbild zugeordneten Maßstab umfasst.

15. Das Mikroskopsystem nach einem der Ansprüche 1 bis 14, wobei
das Zielbild an einer Position angezeigt wird, die das Sortierziel-Spermium im optischen Bild nicht überlappt.

16. Ein Sortierunterstützungsverfahren, umfassend:
Bilden eines optischen Bildes (O1) einer Probe, die ein Sortierziel-Spermium enthält;
Erfassen eines digitalen Bildes der Probe;
Durchführen (S31) einer Objekterkennung für das digitale Bild;
Detektieren (S31) von Sortierkandidat-Spermien in der Probe basierend auf der Objekterkennung;
Erzeugen (S32, S33, S34) eines Zielbildes als Bild, das das aus den detektierten Sortierkandidat-Spermien ausgewählte Sortierziel-Spermium enthält; und
Anzeigen des Zielbildes in größerer Größe als das Sortierziel-Spermium im optischen Bild, auf einer Bildebene, auf der das optische Bild gebildet ist.

## Revendications

1. Système de microscope (1) comprenant:
un microscope (100) conçu pour former une image optique (O1) d'un échantillon contenant un sperme cible de tri;
un dispositif d'imagerie (143) conçu pour acquérir une image numérique (D1) de l'échantillon;
un dispositif de traitement (200) configuré pour:
- effectuer la détection d'objets sur l'image numérique;
- détecter les spermes candidats de tri dans l'échantillon sur la base de la détection d'objets; et
- générer une image cible (T1) sous la forme d'une image contenant les spermatozoïdes de tri cibles sélectionnés parmi les spermes candidats de tri détectés; et
un dispositif optique (153) conçu pour afficher l'image cible dans une taille plus grande que celle du sperme cible de tri dans l'image optique, sur un plan image sur lequel est formée l'image optique.

2. Système de microscope selon la revendication 1, dans lequel
le dispositif de traitement est configuré pour suivre les spermes candidats de tri détectés par la détection d'objets.

3. Système de microscope selon la revendication 1 ou 2, dans lequel
le dispositif de traitement est configuré pour déterminer le sperme cible de tri parmi les spermes candidats au tri détectés par la détection d'objet.

4. Système de microscope selon la revendication 3, dans lequel
le dispositif de traitement est configuré pour déterminer le sperme cible de tri parmi les spermes candidats au tri, sur la base d'une évaluation de la motilité des spermes candidats au tri.

5. Système de microscope selon la revendication 4, dans lequel
le dispositif de traitement est configuré pour calculer l'évaluation, sur la base d'une classification d'images à l'aide d'un modèle entraîné.

6. Système de microscope selon l'une quelconque des revendications 3 à 5, dans lequel
le dispositif de traitement est configuré pour déterminer le sperme cible de tri parmi les spermes candidats de tri, en fonction des positions respectives des spermes candidats de tri.

7. Système de microscope selon l'une quelconque des revendications 1 à 6, dans lequel
le dispositif de traitement est configuré pour effectuer la détection d'objets à l'aide d'un modèle entraîné.

8. Système de microscope selon l'une quelconque des revendications 1 à 7, dans lequel
le dispositif de traitement est configuré pour générer une image d'aide (A1) concernant l'image cible, et
le dispositif optique est configuré pour afficher, sur le plan image, l'image d'aide conjointement avec l'image cible.

9. Système de microscope selon la revendication 8, dans lequel
l'image d'aide comprend des informations d'évaluation concernant la motilité des spermes cibles du tri.

10. Système de microscope selon la revendication 9, dans lequel
l'image d'aide comprend un marqueur indiquant une position d'intérêt ou une région d'intérêt dans l'image cible.

11. Système de microscope selon la revendication 10, dans lequel
l'image d'aide comprend un marqueur indiquant une vacuole du sperme dans l'image cible.

12. Système de microscope selon l'une quelconque des revendications 8 à 11, dans lequel
l'image d'aide comprend un marqueur indiquant une position ou une région du sperme cible de tri dans l'image optique.

13. Système de microscope selon l'une quelconque des revendications 8 à 12, dans lequel
l'image d'aide comprend des informations de grossissement indiquant un grossissement total de l'image cible à une taille du sperme cible de tri sur une face d'objet.

14. Système de microscope selon l'une quelconque des revendications 8 à 13, dans lequel
l'image d'aide comprend une échelle attribuée à l'image cible.

15. Système de microscope selon l'une quelconque des revendications 1 à 14, dans lequel
l'image cible est affichée à une position qui ne chevauche pas le sperme cible de tri dans l'image optique.

16. Procédé d'aide au tri comprenant:
la formation d'une image optique (O1) d'un échantillon contenant un sperme cible de tri;
l'acquisition d'une image numérique de l'échantillon;
la réalisation (S31) d'une détection d'objet sur l'image numérique;
la détection (S31) des spermes candidats de tri dans l'échantillon sur la base de la détection d'objets;
la génération (S32, S33, S34) d'une image cible sous la forme d'une image contenant le sperme cible de tri
sélectionné parmi les spermes candidats de tri détectés; et
l'affichage de l'image cible dans une taille plus grande que celle du sperme cible de tri dans l'image optique, sur un plan image sur lequel est formée l'image optique.
